# EUROPEAN PATENT APPLICATION

(11) **EP 4 830 971 A1**
(43) Date of publication of application: **28.10.2026**
(21) Application number: 26164802.6
(22) Date of filing: 13.03.2026
(51) Int. Cl.: B60K 35/81, B60W 50/14

(54) **VEHICLE DISPLAY CONTROL DEVICE**

(30) Priority: 24.04.2025 JP 2025072718
(71) Applicant: Toyota Jidosha Kabushiki Kaisha, Toyota-shi, Aichi-ken 471-8571 (JP)
(72) Inventor: KONISHI, Shogo, TOYOTA-SHI, AICHI-KEN, 471-8571 (JP); HATTORI, Tsutomu, TOYOTA-SHI, AICHI-KEN, 471-8571 (JP); TAKADA, Arata, TOYOTA-SHI, AICHI-KEN, 471-8571 (JP); NISHIDA, Takashi, TOYOTA-SHI, AICHI-KEN, 471-8571 (JP); FANG, Zhicheng, TOYOTA-SHI, AICHI-KEN, 471-8571 (JP); NISHIMURA, Shusei, KARIYA-SHI, AICHI, 448-8661 (JP)
(74) Representative: Cabinet Beau de Loménie

(57) **Abstract**

A vehicle display control device (20) including: a recognition unit (211,212) that recognizes curvature of lane marking lines in surroundings of a host vehicle (10), and a relative distance of an other-vehicle with respect to the host vehicle; and a display control unit (216) that displays an other-vehicle image indicating the other-vehicle on a display (44) with a display position and angle of the other-vehicle image corrected based on the curvature and the relative distance.

## Description

### BACKGROUND

### Technical Field

The present disclosure relates to a vehicle display control device.

### Related Art

Conventionally, in display control devices including a sensor system for autonomous driving of a car (see, for example, Japanese Patent Application Laid-Open (JP-A) No. 2022-149449), various objects in the surroundings of a vehicle are detected as targets and, furthermore, the type of such targets is detected and displayed as a target image on a display unit. Moreover, travel lanes traveled by vehicles and positions of lane marking lines are detected, with an image of the travel lanes and lane marking lines also displayed on the display unit.

However, due to such factors as changes in sensor unit sensing accuracy, variation in the vehicle surrounding conditions, and the like, there are sometimes differences between the position where a target image of a detected other-vehicle is displayed and an actual scene (actual view), with this sometimes making a driver feel unsettled.

### SUMMARY

The present disclosure provides a vehicle display control device that may display an other-vehicle image more appropriate, and may reduce a risk of making a driver feel unsettled.

A first aspect of the present disclosure is a vehicle display control device including: a recognition unit that recognizes curvature of lane marking lines in surroundings of a host vehicle, and a relative distance of an other-vehicle with respect to the host vehicle; and a display control unit that displays an other-vehicle image indicating the other-vehicle on a display with a display position and angle of the other-vehicle image corrected based on the curvature and the relative distance.

According to the first aspect, the display position and angle of the other-vehicle image indicating the other-vehicle may be corrected according to the lane marking line curvature and the other-vehicle relative distance, may enable display of the other-vehicle image to be made more appropriate, and may reduce a risk of making a driver feel unsettled.

In a second aspect of the present disclosure, in the first aspect, may further include: a correction unit that performs the correction of the display position and angle of the other-vehicle image based on the curvature and the relative distance; and a threshold table storage unit that stores a threshold defined by a relationship to the curvature and the relative distance, wherein the correction unit corrects the display position and angle of the other-vehicle image when the relative distance has exceeded the threshold.

In the second aspect, by referencing the threshold table storage unit, the display position and angle of the other-vehicle image may be corrected according to the lane marking line curvature and relative distance to the other-vehicle, and may enable a reduction in a risk of making a driver feel unsettled.

In a third aspect of the present disclosure, in the second aspect, the threshold table storage unit may store a first threshold, and a second threshold smaller than the first threshold as the threshold defined by a relationship to the curvature and the relative distance; and the correction unit, may start correction when the relative distance has exceeded the first threshold; and may stop correction when the relative distance is less than the second threshold.

In the third aspect, due to including the first threshold and the second threshold, the display position and angle of the other-vehicle image may be suppressed from being changed frequently, and may enable a reduction in a risk of making a driver feel unsettled.

In a fourth aspect of the present disclosure, in the third aspect, the correction unit may maintain a behavior without change while the relative distance lies between the second threshold and the first threshold, inclusive.

The above fourth aspect may contribute to a further reduction in a risk of making a driver feel unsettled.

In a fifth aspect of the present disclosure, in the third and fourth aspect, a difference between the first threshold and the second threshold may be set so as to differ according to the curvature.

### BRIEF DESCRIPTION OF THE DRAWINGS

Exemplary embodiments will be described in detail based on the following figures, wherein:
Fig. 1 is a block diagram illustrating a hardware configuration of a vehicle 10 including a display control device according to a first exemplary embodiment;
Fig. 2 is a schematic diagram to explain a method of determining reliability with a reliability setting unit 213 of a first exemplary embodiment;
Fig. 3 is a schematic diagram illustrating an example of a case in which a target image is displayed by a monitor 44 according to results of reliability determination in the first exemplary embodiment;
Fig. 4 is a flowchart to explain behavior of the first exemplary embodiment;
Fig. 5 is a block diagram illustrating a hardware configuration of a vehicle 10 including a display control device according to a second exemplary embodiment;
Fig. 6A is a schematic diagram illustrating an example of a case in which a target image is displayed by a monitor 44 in the second exemplary embodiment;
Fig. 6B is a schematic diagram illustrating an example of a case in which a target image is displayed by a monitor 44 in the second exemplary embodiment;
Fig. 7 is a flowchart to explain behavior in the second exemplary embodiment; and
Fig. 8 is a schematic diagram (graph) to explain a method of determining whether to display a target image of an other-vehicle at a center of a lane, or at an actual position, in the second exemplary embodiment.

### DETAILED DESCRIPTION

Explanation follows regarding one or more exemplary embodiment with reference to the appended drawings. The appended drawings illustrate exemplary embodiments according to principles of the present disclosure, however, these are merely for the purpose of understanding the present disclosure, and should absolutely not be understood as being limitations to the present disclosure. The description in the present specification is merely of typical examples and is not meant as limitations to the scope of the patent claims nor to application examples of the present disclosure. Each drawing is schematic, and relationships of dimensions of elements, proportions of elements, and the like illustrated in the drawings do not always match reality. Moreover, relationships of dimensions of elements, proportions of elements, and the like are not always consistent across the drawings.

Although the present exemplary embodiment will be described in sufficient detail to enable implementation of the present disclosure by a person of ordinary skill in the art, other implementations and modes are also possible, and it should be understood that modifications to the configuration/structure, and substitutions of various elements, are possible within a range not departing from the scope of the technology idea and spirit of the present disclosure. The following description should accordingly not be interpreted as limitations thereto.

### First Exemplary Embodiment

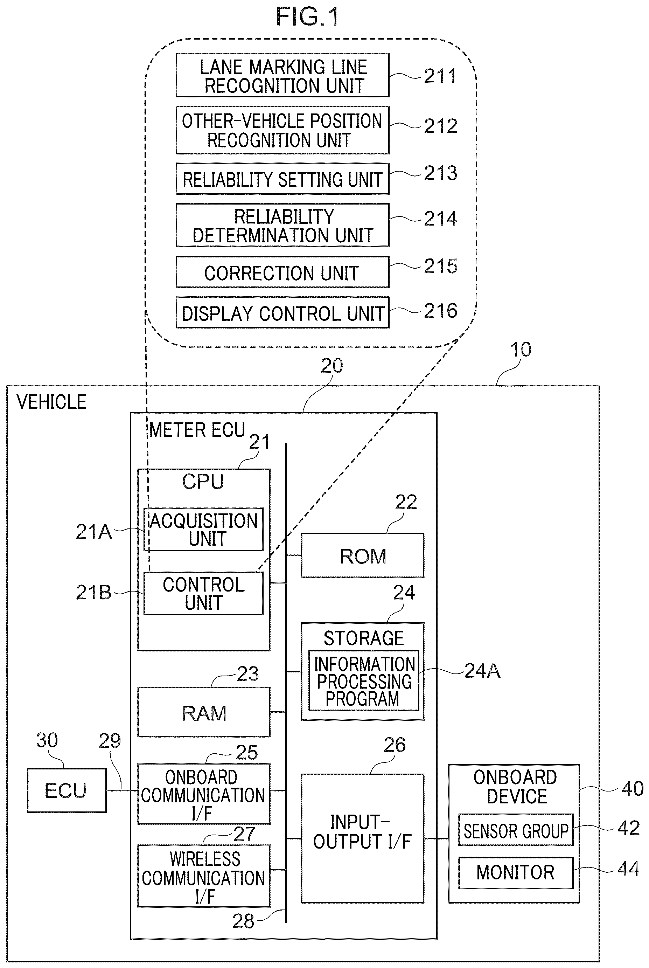

Explanation follows regarding a vehicle 10 including a display control device according to a first exemplary embodiment, with reference to Fig. 1. Fig. 1 is a block diagram illustrating a hardware configuration of the vehicle 10.

As illustrated in Fig. 1, the vehicle 10 includes a meter electronic control unit (ECU) 20. The vehicle 10 is an example of a "host vehicle" of the present disclosure, and the meter ECU 20 is an example of a "vehicle display control device" of the present disclosure.

The meter ECU 20 is configured including a central processing unit (CPU) 21, read only memory (ROM) 22, random access memory (RAM) 23, storage 24, an onboard communication interface (I/F) 25, an input-output I/F 26, and a wireless communication I/F 27. Each of the configuration elements are connected together through an internal bus 28 so as to be capable of communicating with each other.

The CPU 21 is a central processing unit that executes various programs and controls each section. Namely, the CPU 21 reads a program from the ROM 22 or the storage 24, and executes the program using the RAM 23 as a work area. The CPU 21 performs control of each configuration and various computation processing according to the program recorded on the ROM 22 or the storage 24

The ROM 22 is stored with various programs and various data. The RAM 23 serves as a work area for temporarily storing programs and/or data. The storage 24 is configured by a storage medium, such as an embedded Multi Media Card (eMMC), Universal Flash Storage (UFS), or the like, and stores various programs and various data. The storage 24 is stored with an information processing program 24A. The information processing program 24A is a program to cause the CPU 21 to execute specific processing described later.

The onboard communication I/F 25 is an interface for connecting to another ECU 30. A communication standard based on a controller area network (CAN) protocol is employed in this interface. The onboard communication I/F 25 is connected to an external bus 29. Note that, although omitted in the drawings, the ECUs are not limited to the ECU 30, and plural ECUs are provided according to the various functions of the vehicle 10. The input-output I/F 26 is an interface to communicate with the onboard devices 40 installed to the vehicle 10.

The onboard devices 40 are various devices installed to the vehicle 10. The vehicle 10 includes, as examples of the onboard devices 40, a sensor group 42 (sensor unit) and a monitor 44. The sensor group 42 is configured including various sensors and imaging means for detecting a state of the vehicle 10 and surrounding conditions of the vehicle 10. Specifically, the sensor group 42 includes, for example, various sensors such as a 3D-LiDAR sensor, a milliwave sensor, an infrared sensor, a turn indicator sensor, an acceleration position sensor, a vehicle speed sensor, a wheel angle sensor, an angular velocity sensor, a global positioning system (GPS) sensor, an illumination sensor, a gyrosensor, a steering angle sensor, and/or an accelerometer, and also includes plural cameras for capturing images of the periphery of the vehicle 10. The sensor group 42 outputs detection results from each of the sensors and images captured by each of the cameras to a given electronic control unit, such as the meter ECU 20 or the ECU 30.

The monitor 44 is provided to a meter panel arranged in front of a driver's seat of the vehicle 10, and is a meter display for displaying proposals of operations according to functions of the vehicle 10, and images and the like related to explaining these functions. The monitor 44 is an example of a "display unit" of the present disclosure.

The wireless communication I/F 27 is a wireless communication module for communicating with external devices. A communication standard such as, for example, 5G, LTE, Wi-Fi (registered trademark), Bluetooth (registered trademark), or the like is employed in the wireless communication module.

The CPU 21 of the meter ECU 20 includes, as functional configuration, an acquisition unit 21A and a control unit 21B. Each functional configuration is implemented by the CPU 21 reading out and executing the information processing program 24A stored on the storage 24. The acquisition unit 21A acquires various information acquirable by the vehicle 10. Specifically, the acquisition unit 21A acquires, as the various information, detection information such as detection results from the various sensors configuring the sensor group 42, and images captured by each of the cameras.

The control unit 21B performs display control related to display on the monitor 44. For example, based on detection information acquired by the acquisition unit 21A, as the display control, the control unit 21B displays, on the monitor 44, a surrounding condition image illustrating surrounding conditions (lane marking lines and the like) of the vehicle 10 as viewed from a virtual viewpoint, a vehicle image indicating the vehicle 10, and target images illustrating objects (other-vehicles and the like) that have been recognized. A target image is displayed in a display mode according to the recognized target classification (for example, by an icon displaying a classification). A "virtual viewpoint" is a viewpoint set in 3-dimensional virtual space having a position of a vehicle icon illustrating the vehicle 10 as the origin, with the virtual viewpoint defined by given viewpoint coordinates and viewpoint angle (direction) in virtual space. As an example, the virtual viewpoint is a viewpoint looking down at a specific viewpoint angle at the vehicle 10 and the periphery thereof from coordinates of a specific viewpoint positioned above the vehicle icon in virtual space. A control unit 21B is an example of a "control unit" of the present disclosure.

A specific example of the control unit 21B includes a lane marking line recognition unit 211, an other-vehicle position recognition unit 212, a reliability setting unit 213, a reliability determination unit 214, a correction unit 215, and a display control unit 216.

The lane marking line recognition unit 211 recognizes lane marking lines defining a travel lane where a host vehicle and other-vehicles are present traveling on a road surface.

Based on detection signals obtained from a sensor group 42, the other-vehicle position recognition unit 212 recognizes relative positions of other-vehicles present in the periphery of the host vehicle with respect to the host vehicle, and relative positions of the other-vehicles with respect to lane marking lines (i.e. front-rear (longitudinal) direction distances from the host vehicle, right-left (lateral) direction distances from lane marking lines or from the host vehicle, etc.). The other-vehicle position recognition unit 212 applies various methods to recognize relative positions of other-vehicles with respect to lane marking lines. As examples, the other-vehicle position recognition unit 212 performs other-vehicle position recognition with respect to lane marking lines using: a right-left edge position method in which edge detection is performed along a direction extending in a lane marking line direction from the other-vehicle; a neighborhood approximation curve method in which other-vehicle positions are recognized with respect to lane marking lines by generating an approximation curve using a set of data points detected in a localized area of the other-vehicle surroundings; a total approximation curve method in which other-vehicle positions are recognized with respect to lane marking lines by generating an approximation curve utilizing the entire set of detected data points; and a boundary extrapolation method in which other-vehicle positions are recognized with respect to lane marking lines by adding extrapolation data to a boundary line obtained from detected data. The various methods listed above are merely examples, and another method may be applied, and a non-illustrated other method may be substituted. Moreover, obviously other-vehicle recognition with respect to lane marking lines may be performed by combining plural methods. Which method to apply may, for example, be decided according to the volume and distribution state of data obtained.

The reliability setting unit 213 sets a degree of reliability in the other-vehicle position recognition unit 212 for other-vehicle relative position recognition with respect to the lane marking lines. This reliability is an index indicating a possibility of a difference between which position an other-vehicle is recognized at with respect to recognized lane marking lines, and the actual position of the other-vehicle. As an example, the reliability setting unit 213 may set reliability for other-vehicle position recognition according to the method applied to recognize the other-vehicle relative positions with respect to the lane marking lines in the other-vehicle position recognition unit 212, and according to results of lane marking line recognition and other-vehicle positions.

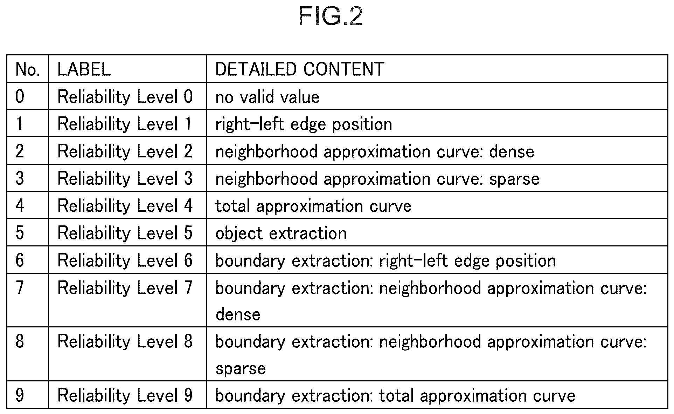

Fig. 2 illustrates an example of relationships between methods applied for other-vehicle relative position recognition with respect to lane marking lines in the other-vehicle position recognition unit 212, and reliability, wherein other conditions (for example, right-left distance and front-rear distances between the host vehicle and the other-vehicles, curvature of lane marking lines, and the like) are kept the same. As an example, the reliability is set as the highest "reliability level 1" when a right-left edge position method is employed to recognize other-vehicle relative positions with respect to lane marking lines. The reliability is given "reliability level 2", which is the next highest reliability after "reliability level 1", when a neighborhood approximation curve method is employed for other-vehicle relative position recognition with respect to lane marking lines and there is also a high density of data (dense). The reliability is given "reliability level 3", which is lower than the "reliability level 2", when the same neighborhood approximation curve method is employed but the data density is low (sparse). In the example of Fig. 2, the lowest reliability is "reliability level 9", and a "reliability level 0" is given, when recognition by the lane marking line recognition unit 211 is not achieved.

The reliability given may be modified in cases in which the method applied for other-vehicle relative position recognition has been changed. Moreover, the reliability may also be modified in cases in which, even though the same method is being applied for other-vehicle relative position recognition, other conditions have changed. As an example, the set reliability may be modified in cases in which a change has been recognized in the other-vehicle relative position with respect to the lane marking lines. Moreover, for example, the reliability may be modified between cases in which the recognized lane marking lines are in front of an other-vehicle, and cases in which the recognized lane marking lines are behind the other-vehicle. In the former case, the positional relationship between the lane marking lines and the other-vehicle can be more clearly ascertained, and so a higher reliability can be set than in latter case.

The reliability determination unit 214 determines a reliability of other-vehicle relative position recognition results in the other-vehicle position recognition unit 212 according to the method employed to determine the relative position of other-vehicles from the host vehicle in the other-vehicle position recognition unit 212, according to distances (in a right-left direction, and/or front-rear direction) of other-vehicles from the host vehicle, according to data of peripheral conditions of the other-vehicles, and the like. The correction unit 215 corrects a position and angle for displaying the other-vehicle according to the reliability determined by the reliability determination unit 214. The display control unit 216 controls display of a target image of the other-vehicle on the monitor 44 (display unit), display of other surrounding condition images, and the like, in a way that reflects the results of correction by the correction unit 215. Note that the reliability determination in the reliability determination unit 214 may be executed in cases in which a distance from the host vehicle of the other-vehicle, which is the determination target, is a given value or greater (for example, 100 m or greater). The reliability may be fixed at the highest rank of "reliability level 1" when the distance is less than the given value.

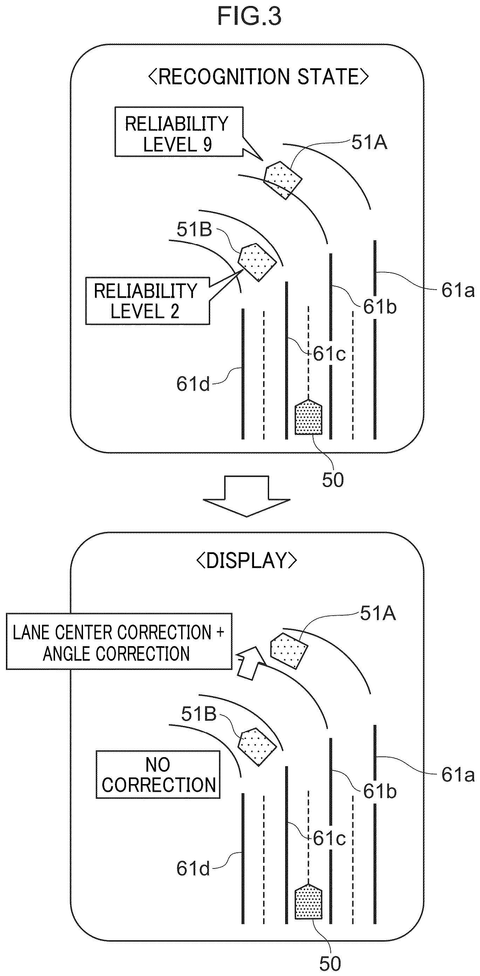

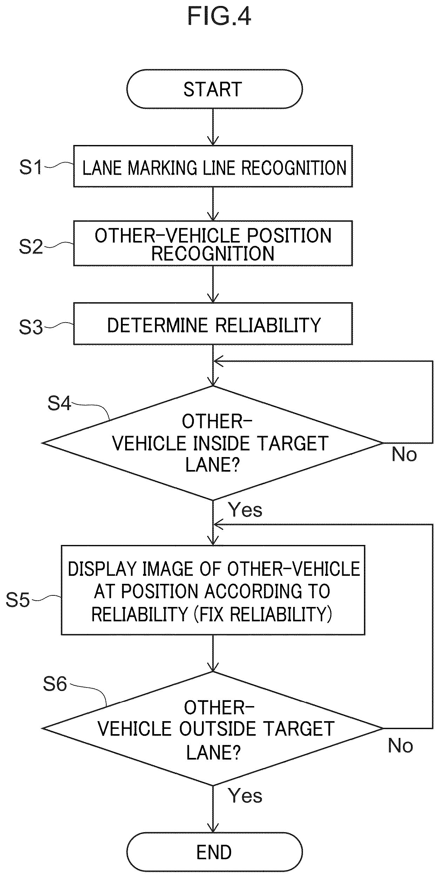

Description follows regarding a procedure for controlling display of the other-vehicle images (target images) in the control unit 21B, with reference to Fig. 3 and Fig. 4. Fig. 3 illustrates a display example of a display screen on the monitor 44, and Fig. 4 is a flowchart to explain various determinations related to display and a procedure for display control.

An overview will now be given of display control for other-vehicle images 51A, 51B illustrating other-vehicles, with reference to Fig. 3. In the display example of Fig. 3, a host vehicle image 50 illustrating an host vehicle, the other-vehicle image 51A or 51B, and lane marking line images 61a to 61d illustrating lane marking lines are displayed on the monitor 44.

The lane marking line images 61a to 61d are displayed according to the recognition results in the lane marking line recognition unit 211 and, when the lane marking lines are curved, the lane marking line images 61a to 61d are depicted according to curve magnitude (curvature etc.) as recognized.

To accompany the lane marking line images 61a to 61d being depicted, a reliability related to recognition of the other-vehicle positions with respect to the lane marking line images 61a to 61d in the other-vehicle position recognition unit 212 is also determined in the reliability setting unit 213 and the reliability determination unit 214. Then, based on the determined reliability, the display position and angle are controlled for the other-vehicle image 51A or 51B with respect to the lane marking line images 61a to 61d. In cases in which the reliability is low (for example, "reliability level 9"), even when it has been determined in the other-vehicle position recognition unit 212 that the other-vehicle corresponding to the other-vehicle image 51A is traveling straddling lane marking lines, for example as illustrated in Fig. 3A, in consideration of the low reliability, the other-vehicle image 51A is still displayed on the monitor 44 so as to be at a position of a center of a travel lane between one lane marking line and another lane marking line, and so as to be angled along the direction of the travel lane (see Fig. 3B). Namely, the correction unit 215 executes correction on the recognition results by the other-vehicle position recognition unit 212 according to the results of determination by the reliability determination unit 214, and as a result thereof, the corresponding other-vehicle image 51A is displayed at a position of the travel lane center, after correcting so as to be angled along the direction of the travel lane. This is performed when the reliability is low, because display at a position of the travel lane center is preferable from the perspective of reducing perplexity of a driver.

However, in cases in which the reliability is high (for example, "reliability level 2"), the other-vehicle image 51B, corresponding to the other-vehicle traveling along the travel lane according to its lane marking lines, is displayed relative to the lane marking line images 61a to 61d as is (uncorrected) in the recognition results (position and angle) of the other-vehicle position recognition unit 212.

Description follows regarding a specific procedure for controlling display of the other-vehicle images 51A, 51B illustrating other-vehicles, with reference to the flowchart of Fig. 4. The lane marking lines are recognized in the lane marking line recognition unit 211 (step S1), the position of the other-vehicle with respect to the other-vehicle lane marking lines and the host vehicle is recognized in the other-vehicle position recognition unit 212 (step S2), the reliability of the other-vehicle position recognition at this step S2 is determined in the reliability determination unit 214 with reference to the reliability setting unit 213 based on a classification of the recognition method applied, the distance of the other-vehicle from the host vehicle, and the like (step S3).

Then, in cases in which the other-vehicle whose reliability has been determined is then determined to be inside a corresponding travel lane (step S4: YES), the other-vehicle image corresponding to the other-vehicle is displayed at a position according to the reliability set at step S3. Note that, a reliability that has once been determined is fixed and not changed from the reliability determined at step S3 while the other-vehicle is determined to be continuing to travel in the travel lane defined by the recognized lane marking lines (step S5). The display position of the other-vehicle image is thereby suppressed from changing frequently, and the driver may be prevented from feeling unsettled. The display control procedure is ended when the other-vehicle is adjudged to be outside of a travel lane (target lane) as defined by the recognized lane marking lines (step S6: YES), and subsequent similar operations are repeated.

As described above, in the vehicle display control device of the present exemplary embodiment, when a position of an other-vehicle with respect to lane marking lines has been recognized, the reliability of this recognition is determined, and when this reliability is low, the other-vehicle image indicating the other-vehicle is displayed on the monitor 44 corrected so as to lie in a direction along the lane marking line at the center of the recognized travel lane (so as not to be angled). In cases in which the recognition of the other-vehicle with respect to lane marking lines is not accurate, or in cases in which the other-vehicle is far from the host vehicle, accurate information is not able to be given to the driver, even were display of the other-vehicle image to be performed according to the detection signals of the sensor group 42, and, on the contrary, this would actually be perplexing. By performing display of the other-vehicle image corrected in the manner described above when the reliability is low, the perplexity of a driver may be reduced.

### Second Exemplary Embodiment

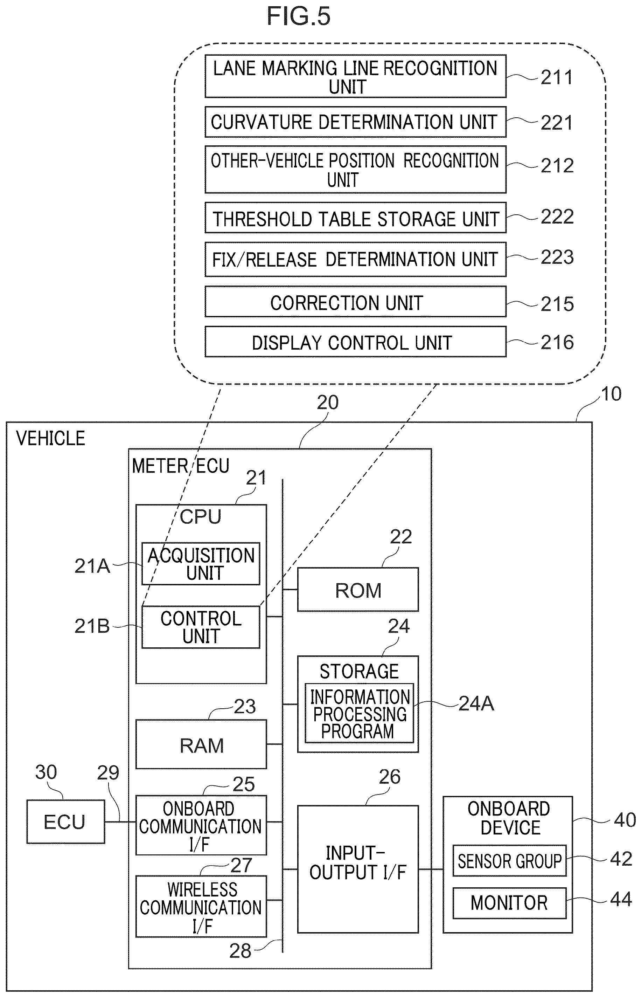

Next, description follows regarding a vehicle 10 including a display control device according to a second exemplary embodiment, with reference to Fig. 5. Fig. 5 is a block diagram illustrating a hardware configuration of a vehicle 10. The same reference numerals are appended in Fig. 5 to configuration elements the same as in the first exemplary embodiment (Fig. 1), and duplicate explanation thereof will be omitted. The second exemplary embodiment differs from the first exemplary embodiment in that the control unit 21B includes a curvature determination unit 221, a threshold table storage unit 222, and a fix/release determination unit 223, either instead of, or as well as, including the reliability setting unit 213 and the reliability determination unit 214.

The curvature determination unit 221 determines a curvature of lane marking lines recognized in the lane marking line recognition unit 211. The threshold table storage unit 222 is a storage unit stored with a table of relationships between lane marking line curvature and distance of lane marking lines from the host vehicle, against thresholds for switching between fixing the display position of an other-vehicle image indicating an other-vehicle at a center of a travel lane irrespective of a position of the other-vehicle determined by the other-vehicle position recognition unit 212, or displaying simply at the position determined by the other-vehicle position recognition unit 212 (whether to release fixing). Details will be described later. These thresholds enable determination as to whether or not the recognition results in the other-vehicle position recognition unit 212 are reliable. This means that the threshold table storage unit 222 is a mode of the reliability setting unit 213 from the first exemplary embodiment.

The fix/release determination unit 223 determines whether to display the detection target other-vehicle fixed with respect to the lane marking lines, or whether to display the other-vehicle as recognized by the other-vehicle position recognition unit 212 (whether to release fixing), based on whether or not, in a combination relationship between the obtained lane marking line curvature and distance of the other-vehicle from the host vehicle, the distance is a threshold or greater as defined by the threshold table storage unit 222. The correction unit 215 corrects the recognition results by the other-vehicle position recognition unit 212 to recognition results so as to display the other-vehicle image of the other-vehicle at the travel lane center when fixed display has been determined in the fix/release determination unit 223. The display control unit 216 performs control of display of the other-vehicle image on the monitor 44 according to the other-vehicle position recognition unit 212 and the corrected results of the correction unit 215, and performs control of display of other images.

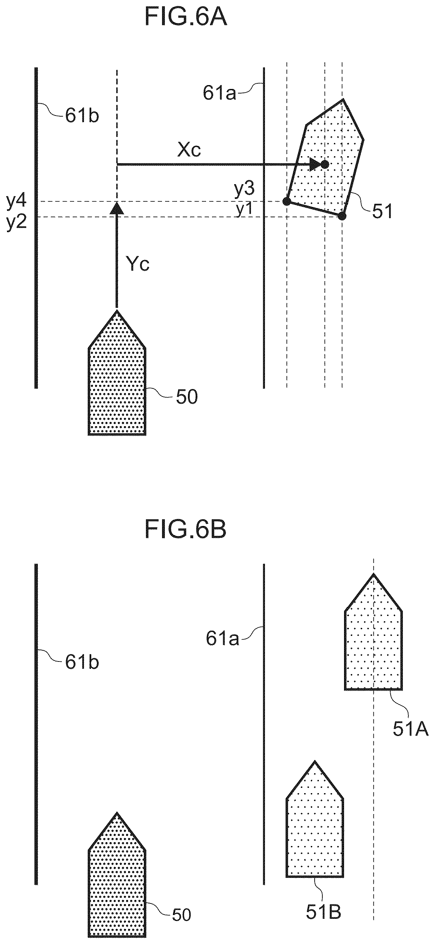

Description follows regarding an overview of control of display of the other-vehicle images 51A, 51B illustrating the other-vehicles, with reference to Fig. 6A and Fig. 6B. Fig. 6A illustrates a measurement method of a right-left distance Xc and a front-rear distance Yc from the host vehicle (corresponding to the host vehicle image 50) to the other-vehicle (other-vehicle images 51 (51A, 51B)), and Fig. 6B accompanies explanation of control to switch the display position of the other-vehicle images 51A, 51B according to the lane marking line curvature and measured distances. In the display example of Fig. 6B, the host vehicle image 50 illustrating the host vehicle, the other-vehicle images 51 (51A, 51B), and the lane marking line images 61a, 61b illustrating the lane marking lines, are displayed on the monitor 44.

The lane marking line images 61a, 61b are displayed according to the results of recognition in the lane marking line recognition unit 211, and when the lane marking lines are curved, the lane marking line images 61a, 61b are depicted according to the recognized curve magnitude (radius of curvature etc.).

The lane marking line curvature is determined in the curvature determination unit 221 and, moreover, the right-left distance Xc and the front-rear distance Yc of the other-vehicle from the host vehicle are determined in the other-vehicle position recognition unit 212. The right-left distance Xc can be measured, for example, as a length of a perpendicular line dropped from a line segment extending along the front-rear direction of the own vehicle to the center of gravity of the other vehicle. Moreover, the front-rear distance Yc can be measured, for example, as an average (or a median) of distances between the front end of the own vehicle and respective intersection positions y1, y2, y3, and y4, which are obtained by dropping perpendicular line from the rear-left end and rear-right end of the other vehicle to the lane marking lines 61a and 61b.

The curvature of the lane marking lines 61a, 61b is measured, the front-rear distance Yc to the other-vehicle is also measured and, according to a relationship to the curvature and the front-rear distance Yc, determination is performed by the fix/release determination unit 223 as to whether the display position of the other-vehicle image indicating the other-vehicle is to be display fixed at the center of the travel lane defined by the lane marking lines 61a, 61b, or is to be display as in the results recognized by the other-vehicle position recognition unit 212 (whether to release fixing). When fixed, the recognition results from the other-vehicle position recognition unit 212 are corrected by the correction unit 215 such that the other-vehicle image is positioned at the travel lane center. When fixing-release is determined, the other-vehicle image is displayed as is in the results recognized by the other-vehicle position recognition unit 212 (without correction).

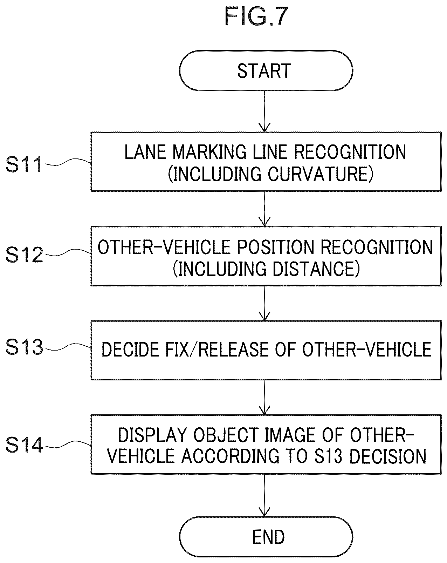

Description follows regarding a specific procedure to control the display of the other-vehicle images 51 illustrating the other-vehicle, with reference to the flowchart of Fig. 7. The lane marking lines are recognized in the lane marking line recognition unit 211, and also the lane marking line curvature is determined in the curvature determination unit 221 (step S11), the relative position (including distances) of the other-vehicle with respect to the lane marking lines and the host vehicle is recognized in the other-vehicle position recognition unit 212 (step S12), then based on the curvature determined at step S11 and on the front-rear distance Yc, determination is performed in the fix/release determination unit 223 as to whether to display the other-vehicle image of the other-vehicle fixed to the travel lane center, or to display at the position as is in the recognition results of the other-vehicle position recognition unit 212 (whether to release fixing) according to the results of a comparison of the front-rear distance Yc and thresholds (step S13). According to the decision at step S13, display of the other-vehicle image indicating the other-vehicle is then performed (step S14).

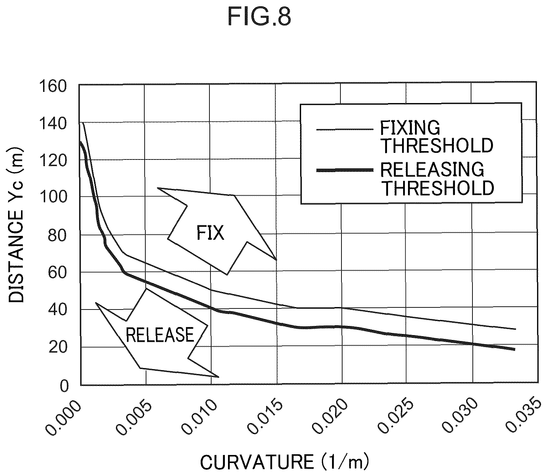

Fig. 8 is a graph illustrating an example of threshold data stored in the threshold table storage unit 222. The threshold table storage unit 222 illustrated in Fig. 8 is stored with two thresholds, a fixing threshold and a releasing threshold. The fixing threshold is employed as a threshold when a fixing-released state for display of the other-vehicle image indicating the other-vehicle has been obtained in the results recognized by the other-vehicle position recognition unit 212, to determine whether or not to switch from the fixing-released state to a fixed state. On the other hand, the releasing threshold is employed as a threshold when a fixed state to fix the other-vehicle image indicating the other-vehicle at the center of the travel lane defined by the lane marking lines irrespective of the results recognized by the other-vehicle position recognition unit 212 has been obtained, to determine whether or not to switch from the fixed state to the fixing-released state.

For example, when the threshold table storage unit 222 is set as illustrated in Fig. 8, the fix/release determination unit 223 sets a state in which other-vehicle image of the other-vehicle is displayed fixed at the travel lane center if the lane marking line curvature is 0.020 (1/m) and the front-rear distance Yc of the other-vehicle has exceeded 40 m. However, when these have become less than the releasing threshold as the other-vehicle nears the host vehicle, for example when front-rear distance Yc has become less than 30 m, the fixing-released state to release the fixed state is obtained, and the other-vehicle image indicating the other-vehicle is displayed so as to be positioned as in the results recognized by the other-vehicle position recognition unit 212.

On the contrary, when the threshold table storage unit 222 is set as illustrated in Fig. 8, the fix/release determination unit 223 sets a state in which other-vehicle image of the other-vehicle is displayed fixed at the travel lane center if the lane marking line curvature is 0.020 (1/m) and the front-rear distance Yc of the other-vehicle is less than 30 m. However, when the fixing threshold is exceeded as the other-vehicle moves away from the host vehicle, for example when the front-rear distance Yc has exceeded 40 m, the fixing-released state is released and the fixed state is obtained, and the other-vehicle image indicating the other-vehicle is displayed so as to be fixed at the travel lane center irrespective of the results recognized by the other-vehicle position recognition unit 212.

As illustrated in Fig. 8, these two thresholds, the fixing threshold and the releasing threshold, are provided in the present exemplary embodiment, and correction by the correction unit 215 is started when the front-rear distance Yc has exceeded the fixing threshold, and correction by the correction unit 215 is stopped when the front-rear distance Yc is less than the releasing threshold. The behavior of the correction unit 215 (fixed state or fixing-released state) is maintained without change while the front-rear distance Yc is between the releasing threshold and the fixing threshold. This accordingly prevents the other-vehicle image indicating the other-vehicle from being frequently switched between the fixed state and the fixing-released state, thereby enabling a reduction in driver perplexity. Note that a difference between the fixing threshold and the releasing threshold may, for example, be set at about 10 m. The difference between the fixing threshold and the releasing threshold may be constant irrespective of the lane marking line curvature, or may be changed according to the curvature.

As described above, when lane marking line recognition and other-vehicle position recognition have been performed, the vehicle display control device of the present exemplary embodiment appropriately switches between a fixed state in which the other-vehicle image indicating the other-vehicle is displayed fixed at the center of the travel lane defined by the lane marking lines, or a fixing-released state displayed as is at the position in the recognition results, based on the lane marking line curvature and the front-rear distance from the host vehicle to the other-vehicle. This accordingly may suppress the display position of the other-vehicle image from frequently changing, suppressing perplexity from being imparted to a driver. Setting different thresholds (the fixing threshold and the releasing threshold) as thresholds for switching between the fixed state and the fixing-released state accordingly enables display of the other-vehicle image to be made even more appropriate.

### Other

The control unit of the present disclosure and the method thereof may be implemented by a dedicated computer configuring a processor programed so as to execute one or plural functions using a computer program. Alternatively, the device of the present disclosure and the method thereof may be implemented by a dedicated computer configuring a processor using a dedicated hardware logic circuit. The device of the present disclosure and the method thereof may also be implemented by one or more dedicated computers configured by a combination of a processor to execute a computer program and one or more hardware logic circuits. Moreover, a computer program may be stored as instructions for execution by a computer on a computer readable, non-transitory recording medium.

The present invention is not limited to the above exemplary embodiments, and includes various modified examples. For example, although a detailed description has been given in the above exemplary embodiment in order to facilitate understanding of the present invention, there is no limitation to always including all of the described configuration. Moreover, part of the configuration of a given example may be substituted by the configuration of another example, and configuration of another example may be added to the configuration of a given example. Moreover, part of the configuration of each example may have other configuration added thereto, may be eliminated, or may be substituted.

## Claims

1. A vehicle display control device (20) comprising:
a recognition unit (211, 212) that recognizes curvature of lane marking lines in surroundings of a host vehicle (10), and a relative distance of an other-vehicle with respect to the host vehicle (10); and
a display control unit (216) that displays an other-vehicle image (51A, 51B) indicating the other-vehicle on a display (44) with a display position and angle of the other-vehicle image (51A, 51B) corrected based on the curvature and the relative distance.

2. The vehicle display control device (20) of claim 1, further comprising:
a correction unit (215) that performs the correction of the display position and angle of the other-vehicle image (51A, 51B) based on the curvature and the relative distance; and
a threshold table storage unit (222) that stores a threshold defined by a relationship to the curvature and the relative distance,
wherein the correction unit (215) corrects the display position and angle of the other-vehicle image (51A, 51B) when the relative distance has exceeded the threshold.

3. The vehicle display control device (20) of claim 2, wherein:
the threshold table storage unit (222) stores a first threshold, and a second threshold smaller than the first threshold as the threshold defined by a relationship to the curvature and the relative distance; and
the correction unit (215),
starts correction when the relative distance has exceeded the first threshold; and
stops correction when the relative distance is less than the second threshold.

4. The vehicle display control device (20) of claim 3, wherein the correction unit (215) maintains a behavior without change while the relative distance lies between the second threshold and the first threshold, inclusive.

5. The vehicle display control device (20) of claim 3 or claim 4, wherein a difference between the first threshold and the second threshold is set so as to differ according to the curvature.
